# EUROPÄISCHE PATENTSCHRIFT

(11) **EP 3 824 032 B1**
(45) Veröffentlichungstag und Bekanntmachung des Hinweises auf die Patenterteilung: **07.06.2023**
(21) Anmeldenummer: 19742331.2
(22) Anmeldetag: 15.07.2019
(51) Int. Cl.: C09D 5/00

(54) **ZUSAMMENSETZUNG ZUR BESCHICHTUNG UND VERSIEGELUNG VON KANTEN VON HOLZFASERPLATTEN**
COMPOSITION FOR COATING AND SEALING OF EDGES OF WOOD FIBRE BOARD
COMPOSITION DE REVÊTEMENT ET DE SCELLEMENT DES BORDS DES PANNEAUX FIBREUX

(30) Priorität: 16.07.2018 EP 18183673
(43) Veröffentlichungstag der Anmeldung: 26.05.2021
(73) Patentinhaber: Flooring Technologies Ltd., Kalkara SCM1001 (MT)
(72) Erfinder: KALWA, Norbert, 32805 Horn-Bad Meinberg (DE); GIER, Andreas, 66399 Mandelbachtal (DE)
(74) Vertreter: Maikowski & Ninnemann Patentanwälte Partnerschaft mbB
(86) Internationale Anmeldenummer: PCT/EP2019/068998
(87) Internationale Veröffentlichungsnummer: WO 2020/016176

(56) Entgegenhaltungen:
- WO-A1-01/53387
- WO-A1-2009/032988
- WO-A1-2012/017235
- US-A1- 2006 110 541
- US-A1- 2008 250 978

## Beschreibung

Die vorliegende Erfindung betrifft eine Holzfaserplatte mit einer Zusammensetzung zur Beschichtung und Versiegelung von Kanten von Holzfaserplatten und ein Verfahren zur Beschichtung von Kanten einer Holzfaserplatte.

**Beschreibung** Es ist bekannt, dass das Produkt Laminatboden insbesondere nach der Umstellung von in Nut-und-Feder miteinander verleimten Elementen auf die leimlose Verlegung, in dem Übergang der Elemente eine Schwachzone bezüglich Feuchtigkeitsangriff bzw. Auftreten von Feuchtigkeitsschäden besitzt. Diese Schäden können durch direkte Feuchtigkeitseinwirkung, Überpflege usw. entstehen. Allerdings steht diesem Problem die sehr einfache und schnelle Verlegung dieses Bodenbelags mit den sogenannten Clickprofilen gegenüber. Man kann davon ausgehen, dass heute weit über 90% der Laminatböden mit einem Clickprofil hergestellt werden.

Zur Minderung von Feuchteschäden werden bisher verschiedene Strategien einzeln oder in Kombination angewendet. Die einfachste Möglichkeit, das Eindringen von Feuchtigkeit in das Profil zu erschweren, besteht darin, eine möglichst stramme Passung in der Nut- und Federverbindung zu verwenden. Dies kann allerdings zu einem erschwerten Zusammenfügen der Elemente oder dem Auftreten von Beschädigungen führen. Diese Methode hat zudem den Nachteil, dass, wenn Wasser in den Nut- und Federbereich eingedrungen ist, der Holzwerkstoffträger normal quillt.

Dieser Effekt kann gesteigert werden, in dem im Übergang der Elemente schon bei der Direktbeschichtung durch ein spezielles Pressblech eine Verdichtung erzeugt wird. Dies wird in der WO 2017/072657 A1 beschrieben. Allerdings wird damit die Quellung nur verzögert und nicht generell verhindert.

Eine weitere Möglichkeit ist die Versiegelung des Profils mit Hydrophobierungsmitteln. So wird in der WO 2006/038867 die Verwendung von Wachsen zur Beschichtung der Kanten beschrieben, wobei zumindest ein teilweises Eindringen des Wachses in das Holzwerkstoffmaterial zu beobachten ist. Aus der EP 903451 A2 ist die Verwendung von Diisocyanat-Diphenylmethan zur Behandlung der Kanten entnehmbar, das leicht in den Holzwerkstoff penetriert. In der WO 2008/078181 A1 wird wiederum ein fluoriertes Polymer, z.B. Perfluoroalkyl-Methacrylic-Copolymer als Beschichtungsmittel verwendet, wobei das schichtbildende Material bei Raumtemperatur fest ist.

Weitere Beschichtungsmittel werden u.a. in der WO 2012/017235 A1, WO 01/53387 A1, US 2006/0110541 A1, US 2008/0250978 A1 oder WO 2009/032988 A1 beschrieben.

WO 2012/017235 A1 betrifft die Verwendung einer Polymerbeschichtung auf der Unterseite eines Bodenbelages zur Unterstützung der Adhäsion des Bodenbelages auf einen Boden. WO 01/53387 A1 beschreibt eine Beschichtung für verschiedene Oberflächen mit einer verbesserten Abriebfestigkeit. Aus den Ansprüchen ist entnehmbar, dass die Beschichtung anorganische Partikel, wie zum Beispiel Siliziumpartikel, eine Kopplungsreagens umfassend hydrolysierte Silane und ein Harz umfassend eine Mischung aus verschiedenen Acrylaten enthält. US 2006/0110541 A1 betrifft Verfahren und Zusammensetzungen zur Ausbildung von transparenten Schutzbeschichtungen auf verschiedenen Oberflächen. US 2008/0250978 A1 und WO 2009/032988 A1 beschreiben jeweils eine hydrophobe selbstreinigende Beschichtungszusammensetzung mit modifizierten Siliziumpartikeln, die unter anderem mit Organosilanen oder Alkylsilanen behandelt wurden.

Der Nachteil dieser bekannten Versiegelungsmittel besteht somit insbesondere darin, dass diese häufig bereits bei der Applikation in den Holzwerkstoffträger wandern und damit der Hydrophobierungseffekt minimiert wird. Dies kann aber auch nachträglich erfolgen, sodass der Effekt in der Nutzung langsam verloren geht.

Eine weitere Möglichkeit ist die Verwendung von quellvergüteten Holzwerkstoffplatten, bei denen in der Herstellung höherwertige Leime (Melaminverstärkte UF-Leime, PMDI usw.) eingesetzt werden.

Von den geschilderten Maßnahmen führt lediglich die Verwendung von höherwertigen Leimen zu einer Reduzierung der Quellung der Platten. Die übrigen verursachen lediglich eine Verzögerung des Eindringens des Wassers im Profilbereich.

Die Quellung wird üblicherweise gemäß der DIN EN 13329:2016 bzw. der ISO 24336: 2005 nach dem sogenannten Kantenquelltest bestimmt. Dabei wird ein beschichteter Probekörper ohne Profil (150 x 50 mm) vertikal 50 mm in ein Wasserbad (20° C) eingetaucht und dann im eingetauchten Bereich nach 24 h die Kantenquellung an drei Stellen bestimmt. Zur Prüfung der Wirksamkeit von anderen Maßnahmen werden meist aus der Anwendung heraus abgeleitete Prüfmethoden herangezogen (Wasserauflegetest, feuchter Lappen auf Oberfläche). Dort werden auf zusammengelegte Elemente im Profilbereich Feuchtebeanspruchungen durch verschüttete Flüssigkeiten bzw. durch lang einwirkende Feuchtigkeit simuliert.

Dabei erreichen die meisten Produkte auch bei kombinierter Anwendung von Maßnahmen lediglich eine Quellreduzierung von maximal 50% beim Kantenquelltest. Dies erzeugt bei kurzfristiger Wasserbeaufschlagung schon einen gewissen Schutz, führt aber bei längerer Einwirkung des Wassers häufig doch zu Beanstandungen.

Entsprechend ergeben sich aus den bekannten Maßnahmen verschiedene Nachteile. So ist die Verbesserung des Quellschutzes zu gering, die vorgeschlagenen Maßnahmen können teilweise reale Beanspruchungen nicht standhalten und die bewirkten Effekte sind zeitlich begrenzt.

Der vorliegenden Erfindung lag somit die Aufgabe zugrunde, die angeführten Nachteile zu überwinden. Insbesondere lag der Erfindung die technische Aufgabe zu Grunde, einen Laminatboden zu produzieren, der durch einen kombinierten Schutz eine Reduzierung der Kantenquellung im Vergleich zu der Nullprobe um mindestens 50% ermöglicht.

Diese Aufgabe wird erfindungsgemäß durch eine Holzfaserplatte mit beschichteten und versiegelten Kanten mit den Merkmalen des Anspruchs 1 gelöst.

Entsprechend wird eine Holzfaserplatte mit beschichteten und versiegelten Kanten bereit gestellt, wobei die für die zur Versiegelung / Beschichtung der Kanten verwendete Zusammensetzung herstellbar ist aus:
- mindestens einer Verbindung der allgemeinen Formel (I)

   **R¹ₐSiX₍₄₋ₐ₎** **(I),**

   und/oder deren Hydrolyseprodukte, wobei
   - X H, OH oder ein hydrolysierbarer Rest ausgewählt aus der Gruppe umfassend , Alkoxy, Aryloxy, Acyloxy ist, und
   - R¹ ein organischer Rest ist ausgewählt aus der Gruppe umfassend Alkyl, Aryl, Cycloalkyl, die durch -O- oder -NH- unterbrochen sein können, und
   - wobei R¹ mindestens eine funktionelle Gruppe Q₁ aufweist, die ausgewählt ist aus einer Gruppe enthaltend eine Hydroxy-, Amino-, Monoalkylamino-, Carboxy-, Mercapto-, Alkoxy-, Aldehyd-, Acryl-, Acryloxy-, Methacryl-, Methacryloxy-, Cyano-, Isocyano-und Epoxid- Gruppe, und
   - a = 0, 1, 2, 3, insbesondere 0 oder 1 ist,
- mindestens einer Verbindung der allgemeinen Formel (II)

   **R²_{b}SiX_{(4-b)}** **(II),**

   und/oder deren Hydrolyseprodukte, wobei
   - X die obige Bedeutung aufweist,
   - R² ein nicht-hydrolysierbarer organischer Rest ist ausgewählt aus der Gruppe umfassend Alkyl, Aryl, Alkenyl, Alkinyl, Cycloalkyl, Cycloalkenyl, und
   - b = 1, 2, 3, oder 4 ist, und
   - mindestens einer Polymerdispersion.

Die vorliegende Zusammensetzung umfasst mit der Verbindung der allgemeinen Formel (I) eine vernetzende Komponente und mit der Verbindung der allgemeinen Formel (II) eine hydrophobe Komponente. Die vernetzende, hydrophile Komponente der Formel (I) ermöglicht zum einen, insbesondere über die (vorhandenen oder sich mittels Hydrolyse von z.B. AlkoxyGruppen bildenden) freien -OH Gruppen, eine Anbindung der Verbindung an die Holzfasern und zum anderen die Ausbildung eines Netzwerkes. Die hydrophobe Komponente der Formel (II) - gebildet z.B. aus den Alkylgruppen des Restes R² - bildet eine wasserabweisend Barriere auf. Auf diese Weise kann das Wasser nicht durch das Netzwerk der ausgebildeten Beschichtung diffundieren.

Die vorliegende Zusammensetzung ermöglicht ein Auffüllen der in der Holzfaserplatte vorhandenen Poren und ein Umhüllen der Holzfasern, wodurch diese "versiegelt" werden. Andererseits wird durch die Verwendung hydrophober Modifikationen eine "Hydrophobierung" der noch verbleibenden Poren und der noch unbeschichteten Holzfasern aufgebaut.

Um ein möglichst hohe Flexibilität der Beschichtung zu erhalten wird der anorganische Binder noch mit einer geeigneten, wässrigen Polymerdispersion vermischt. Die verwendeten Polymere haben funktionelle Gruppen, die mit der anorganischen Matrix kompatibel sind. Daher gelingt es auch bei geringen Temperaturen, eine Beschichtung mit hohem Vernetzungsgrad herzustellen.

Wie noch später im Detail erläutert, ist die vorliegende Zusammensetzung für beliebige Plattensysteme und Leimsysteme einsetzbar. So bewirkt die Zusammensetzung eine Quellreduzierung bei Holzfaserplatten unabhängig von den verwendeten Leimsystemen, unterschiedlicher Porosität oder Plattenstärke. So konnte die quellreduzierende Wirkung der vorliegenden Zusammensetzung bei HDF-Platten mit Harnstoff-Formaldehyd-Leim (UF-Leim), Melamin-Harnstoff-Formaldehyd-Leim (MUF-Leim) oder Polyurethan-basierten-Leim (PMDI-Leim) oder auch bei Platten aus Wood Plastic Composites (WPC) nachgewiesen werden.

Die erfindungsgemäße Zusammensetzung bietet verschiedene Vorteile. So wird eine deutlich niedrigere Quellung der Kanten bewirkt, die Zusammensetzung penetriert oder migriert nicht in die Platten, die Zusammensetzung kann bei beliebigen Platten- und Leimsystemen eingesetzt werden und es sind nur relativ geringe Auftragsmengen notwendig.

Der hydrolysierbare Rest X ist vorteilhafterweise ausgewählt aus einer Gruppe enthaltend H, OH, , C₁₋₆-Alkoxy, insbesondere Methoxy, Ethoxy, n-Propoxy und Butoxy, C₆₋₁₀-Aryloxy, insbesondere Phenoxy, C₂₋₇-Acyloxy, insbesondere Acetoxy oder Propionoxy, . Besonders bevorzugt ist der Rest X H, OH oder Alkoxy, insbesondere Methoxy, Ethoxy, n-Propoxy oder i-Propoxy.

Der organische Rest R¹ ist bevorzugt ausgewählt aus einer Gruppe umfassend C₁-C₃₀-Alkyl, insbesondere C₅-C₂₅-Alkyl, C₂-C₆-Alkenyl, C₃-C₈-Cycloalkyl und C₃-C₈-Cycloalkenyl. In einer Ausführungsform ist der organische R¹ ausgewählt aus der Gruppe enthaltend Methyl, Ethyl, n-Propyl, Isopropyl, n-Butyl, s-Butyl, t-Butyl, Pentyl, Hexyl, Cyclohexyl, Vinyl, 1-Propenyl, 2-Propenyl, Butenyl, Acetylenyl, Propargyl, Butadienyl oder Cyclohexadienyl, bevorzugt Methyl, Ethyl, Propyl oder Vinyl.

In einer Ausführungsform der vorliegenden Zusammensetzung ist die mindestens eine funktionelle Gruppe Q¹ ausgewählt aus einer Gruppe enthaltend Epoxid-, Hydroxy-, Ether-, Acryl-, Acryloxy-, Methacryl-, Methacryloxy-, Amino-, Alkoxy-, Cyano- und/oder Isocyano-Gruppe. Die funktionelle Gruppe Q¹ kann demnach vorteilhafterweise einen Rest mit einer Doppelbindung oder einer Epoxid-Gruppe auf, der mittels UV-Strahlung aktivierbar und polymerisierbar ist.

In einer Variante der vorliegenden Zusammensetzung können Verbindungen der allgemeinen Formel (I) gemäß R¹ₐSiX₍₄₋ₐ₎, insbesondere R¹SiX₃, mit einer funktionellen Gruppe Q1 ausgewählt sein aus Methacryloxypropyltrimethoxysilan (MPTS), Aminoethylaminopropyltrimethoxysilan, Silane mit einer Epoxyfunktionalisierung wie Glycidyloxypropyltriethoxysilan, oder Silane mit einer Vinylfunktionalisierung wie z.B. Vinyltrimethoxysilan.

Wie beschrieben, kann der Rest R¹ über mindestens eine funktionelle Gruppe Q¹ verfügen. Darüber hinaus kann der Rest R¹ auch mit weiteren Resten substituiert vorliegen.

Der Begriff "substituiert", in Verwendung mit "Alkyl", "Alkenyl", "Aryl", etc., bezeichnet die Substitution eines oder mehrerer Atome, in der Regel H-Atome, durch einen oder mehrere der folgenden Substituenten, bevorzugt durch einen oder zwei der folgenden Substituenten: Halogen, Hydroxy, geschütztes Hydroxy, Oxo, geschütztes Oxo, C₃-C₇-Cycloalkyl, bicyclisches Alkyl, Phenyl, Naphthyl, Amino, geschütztes Amino, monosubstituiertes Amino, geschütztes monosubstituiertes Amino, disubstituiertes Amino, Guanidino, geschütztes Guanidino, ein heterozyklischer Ring, ein substituierter heterozyklischer Ring, Imidazolyl, Indolyl, Pyrrolidinyl, C₁-C₁₂-Alkoxy, C₁-C₁₂-Acyl, C₁-C₁₂-Acyloxy, Acryloyloxy, Nitro, Carboxy, geschütztes Carboxy, Carbamoyl, Cyano, Methylsulfonylamino, Thiol, C₁-C₁₀-Alkylthio und C₁-C₁₀-Alkylsulfonyl. Die substituierten Alkygruppen, Arylgruppen, Alkenylgruppen, können einmal oder mehrfach substituiert sein und bevorzugt 1- oder 2-mal, mit denselben oder unterschiedlichen Substituenten.

Der Begriff "Alkinyl", wie hier verwendet, bezeichnet einen Rest der Formel R-C=C-, insbesondere ein "C₂-C₆-Alkinyl". Beispiele für C₂-C₆-Alkinyle schließen ein: Ethinyl, Propinyl, 2-Butinyl, 2-Pentinyl, 3-Pentinyl, 2-Hexinyl, 3-Hexinyl, 4-Hexinyl, Vinyl sowie Di- und Tri-ine von geraden und verzweigten Alkylketten.

Der Begriff "Aryl", wie hierin verwendet, bezeichnet aromatische Kohlenwasserstoffe, beispielsweise Phenyl, Benzyl, Naphthyl, oder Anthryl. Substituierte Arylgruppen sind Arylgruppen, die, wie oben definiert, mit einem oder mehreren Substituenten, wie oben definiert, substituiert sind.

Der Begriff "Cycloalkyl" umfasst die Gruppen Cyclopropyl, Cyclobutyl, Cyclopentyl, Cyclohexyl und Cycloheptyl.

In einer besonders bevorzugten Variante der vorliegenden Zusammensetzung entspricht die Verbindung der allgemeinen Formel (I) der Formel **SiX₄,** wobei der Rest X OH oder Alkoxy, insbesondere Methoxy, Ethoxy, n-Propoxy oder i-Propoxy, ist. Als besonders bevorzugte Vernetzer werden Tetramethoxysilan und Tetraethoxysilan verwendet.

In einer weiteren Ausführungsform der vorliegenden Zusammensetzung ist der nicht-hydrolysierbare organische Rest R² der Verbindung gemäß der Formel (II) ausgewählt aus einer Gruppe umfassend C₁-C₁₅-Alkyl, insbesondere C₁-C₁₀-Alkyl, C₂-C₆-Alkenyl, C₂-C₆-Alkinyl und C₆-C₁₀-Aryl. Diese können nicht-substituiert oder mit einer weiteren hydrophoben Gruppe substituiert sein.

Es ist bevorzugt, wenn der nicht-hydrolysierbare organische Rest R² ausgewählt ist aus der Gruppe enthaltend Methyl, Ethyl, n-Propyl, Isopropyl, n-Butyl, s-Butyl, t-Butyl, Pentyl, Hexyl, Heptyl, Octyl, Nonyl, Cyclohexyl, Vinyl, 1-Propenyl, 2-Propenyl, Butenyl, Acetylenyl, Propargyl, Phenyl und Naphthyl. Besonders bevorzugt sind Methyl, Ethyl, Propyl, Octyl, oder PhenylReste.

Unter dem Begriff "nicht-hydrolysierbarer organischer Rest" ist im Rahmen der vorliegenden Erfindung ein organischer Rest zu verstehen, der in Gegenwart von Wasser nicht zur Bildung einer mit dem Si-Atom verknüpften OH-Gruppe oder NH₂-Gruppe führt.

Die Verbindung der Formel (II) kann insbesondere eine der folgenden Formeln umfassen:
- R²₄Si mit R² als C1-C5 Alkyl-Gruppe, bevorzugt Methyl oder Ethyl wie z.B. Tetramethylsilan;
- R²₃SiX mit R² als C1-C5 Alkyl-Gruppe, bevorzugt Methyl oder Ethyl und mit X als H, wie z.B. Trimethylsilan,
- R²SiX₃ mit R² als C1-C10 Alkyl-Gruppe, bevorzugt Methyl, Ethyl, Propyl, Pentyl, Hexyl, Heptyl, Octyl, oder als C6-C10-Aryl-Gruppe, bevorzugt Phenyl und mit X als Alkoxy, insbesondere Methoxy, Ethoxy, n-Propoxy oder i-Propoxy, wie z.B. Octyltriethoxysilan, Phenyltriethoxysilan.

In einer Variante der vorliegenden Zusammensetzung werden jeweils eine Verbindung der allgemeinen Formel (I) und eine Verbindung der allgemeinen Formel (II) verwendet.

In einer weiteren Variante der vorliegenden Zusammensetzung können aber auch mindestens eine Verbindung der allgemeinen Formel (I) und mindestens zwei, bevorzugt mindestens drei Verbindungen der allgemeinen Formel (II) enthalten sein. Jegliche Kombination ist hier vorstellbar.

So kann in einer Variante die Zusammensetzung Tetraethoxysilan als Verbindung der Formel (I) und Trimethylsilan und Phenyltriethoxysilan als Verbindungen der Formel (II) enthalten.

In einer anderen Variante die Zusammensetzung Tetraethoxysilan als Verbindung der Formel (I) und Trimethylsilan, Phenyltriethoxysilan und Octyltriethoxysilan als Verbindungen der Formel (II) enthalten.

In einer weiteren Ausführungsform sind die Verbindung der allgemeinen Formel (I) in einer molaren Menge zwischen 0,08 - 0.2 mol, bevorzugt 0,1 - 0,15 mol, insbesondere bevorzugt 0,1-0,12 mol und die Verbindung der allgemeinen Formel (II) in einer molaren Menge zwischen 0,05 und 0,1 mol, bevorzugt zwischen 0,06 und 0,09 mol, besonders bevorzugt zwischen 0,07 und 0,08 mol in der Zusammensetzung enthalten.

Dabei kann sich der für die Verbindung der allgemeinen Verbindung (II) angegebene Bereich der molaren Menge sich auf eine Verbindung oder auf die Summe von zwei Verbindungen oder drei Verbindungen der allgemeinen Formel (II) beziehen.

So können in der Variante der Zusammensetzung aus Tetraethoxysilan als Verbindung der Formel (I) und Trimethylsilan und Phenyltriethoxysilan als Verbindungen der Formel (II) 0,15 mol Tetraethoxysilan und 0,04 mol Trimethylsilan / 0,033 mol Phenyltriethoxysilan enthalten sein.

In der anderen Variante der Zusammensetzung aus Tetraethoxysilan als Verbindung der Formel (I) und Trimethylsilan, Phenyltriethoxysilan und Octyltriethoxysilan als Verbindungen der Formel (II) können 0,1 mol Tetraethoxysilan und 0,03 mol Trimethylsilan, / 0.025 mol Phenyltriethoxysilan und 0,043 mol Octyltriethoxysilan enthalten sein.

Das Verhältnis des Silanverbindung der Formel (I) zu den Silanverbindungen der Formel (II) liegt bevorzugt zwischen 1 : 0,5 und 1 : 2, insbesondere bevorzugt zwischen 1 : 0,75 und 1 : 1,5, ganz besonders bevorzugt zwischen 1 : 1 und 1 : 1,2.

In einer weitergehenden Ausführungsform der vorliegenden Zusammensetzung ist das mindestens eine Polymer ausgewählt aus der Gruppe enthaltend Polyurethane, Epoxidharze; Melaminharze, wie Melamin-Formaldehyd-Harz, und Polyacrylate.

Vorliegend ist die Verwendung eines Polyurethan-Polymer bevorzugt, wobei das Polyurethan-Polymer auf der Basis von aromatischen Polyisocyanaten, insbesondere Polydiphenylmethandiisocyanat (PMDI), Toluylendiisocyanat (TDI) und/oder Diphenylmethandiisocyanat (MDI) vorliegt, wobei PMDI besonders bevorzugt ist.

Das Polymer wird in das aus den Silanverbindungen gebildete Netzwerk eingebaut und verleiht der Zusammensetzung flexible Eigenschaften, die einen Auftrag erleichtern.

Die Art des verwendeten Polymers ist bevorzugt auf die verwendeten Silanverbindungen abgestimmt. So ist es von Vorteil, mit Epoxy-Gruppen modifizierte Silane zusammen mit Epoxid-Polymeren und mit Methacrylat-Gruppen modifizierte Silane zusammen mit AcrylatPolymer zu verwenden.

In einer weiteren Ausführungsform der vorliegenden Zusammensetzung ist es ebenfalls möglich mehr als ein Polymer zu verwenden.

In einer weiteren Ausführungsform beträgt der Gehalt des Polymers in der vorliegend verwendeten Zusammensetzung mindestens 30 Gew%, bevorzugt mindestens 20 Gew%, insbesondere bevorzugt mindestens 10 Gew%. In einer Ausführungsvariante beträgt das Verhältnis von Sol-Gel zu Polymer zwischen 1 : 0,1 und 1 : 0,5, bevorzugt zwischen 1 : 0,2 und 1 : 0,4 (bezogen auf die Feststoffe).

Der Lösemittelgehalt, der im Wesentlichen durch die Verwendung der Silane bedingt ist, liegt zwischen 1 bis 15 Gew%, bevorzugt 2 bis 13 Gew%, insbesondere bevorzugt zwischen 4 bis 10 Gew%. Bei diesen Angaben ist der Lösemittelgehalt aus dem eingesetzten Polymer jedoch zunächst nicht berücksichtigt Lösemittel sind insbesondere Wasser und/oder Alkohole, hier bevorzugt Ethanol. Der Alkoholanteil kann z.B. bei < 1 % liegen. Auch ist es möglich, dass die vorliegende Zusammensetzung ausschließlich Alkohol und wenig oder kein Wasser enthält, d.h. die Silanverbindungen und auch die Polymerdispersion können in einer alkoholischen Form verwendet werden.

In einer weiteren Ausführungsform kann die vorliegende Zusammensetzung anorganische Partikel, insbesondere SiO₂, Al₂O₃, ZrO₂, TiO₂-Partikel, enthalten. Die dabei bevorzugt verwendeten Partikel weisen eine Größe zwischen 2 und 400 nm, bevorzugt zwischen 2 bis 100 nm aufweist, insbesondere bevorzugt zwischen 2 bis 50 nm auf. Durch die Zugabe der anorganischen Partikel wird der Feststoffgehalt der Zusammensetzung erhöht, wodurch sich das Auftragsverhalten der Zusammensetzung verbessert. Auch wird durch den Zusatz von anorganischen Partikeln eine Schrumpfung und Rissbildung verhindert. Die anorganischen Partikel können in einem Mengenbereich von 0,1 bis 25 Gew%, bevorzugt 5 bis 20 Gew%, bezogen auf den Feststoffgehalt des Silan-Materials (Sol-Gel-Materials), verwendet werden.

Eine besonders bevorzugte Variante der vorliegenden Zusammensetzung umfasst Tetraethoxysilan, Trimethylsilan, Phenyltriethoxysilan, Octyltriethoxysilan und Polyurethan.

Eine ganz besondere bevorzugte Variante der vorliegenden Zusammensetzung umfasst Tetraethoxysilan, Trimethylsilan, Phenyltriethoxysilan, Octyltriethoxysilan, Polyurethan und SiO₂ Partikel.

Die vorliegend verwendete Zusammensetzung kann in einem Verfahren umfassend die folgenden Schritte hergestellt werden:
- Bereitstellen von mindestens einer Verbindung der allgemeinen Formel (I) und mindestens einer Verbindung der allgemeinen Formel (II);
- optional Zugabe von mindestens Dispersion von anorganischen Partikeln;
- Zugabe von mindestens einem Katalysator, insbesondere einer Säure, zu der Mischung aus mindestens einer Verbindung der Formel (I) und mindestens einer Verbindung der Formel (II);
- Abtrennung der wässrigen Phase des Reaktionsgemisches aus mindestens einer Verbindung der Formel (I) und mindestens einer Verbindung der Formel (II), und
- Zugabe von mindestens einem Polymer zu dem abgetrennten wässrigen Reaktionsgemisch aus mindestens einer Verbindung der Formel (I) und mindestens einer Verbindung der Formel (II).

Als Katalysator geeignete anorganische und/oder organische Säuren sind ausgewählt aus einer Gruppe enthaltend Phosphorsäure, Essigsäure, p-Toluolsulfonsäure, Salzsäure, Ameisensäure oder Schwefelsäure. Ebenfalls geeignet sind Ammoniumsalze wie Ammoniumsulfat, die als schwache Säuren reagieren. *p*-Toluolsulfonsäure ist besonders bevorzugt.

Zur anschließenden Neutralisierung des Reaktionsgemisches wird bevorzugt eine basische Verbindung, wie z.B. Ammoniak zugegeben. Dies führt zu einer Separation der wässrigen Phase mit dem Binderanteil von der alkoholischen Phase (ethanolischen Phase). Die wässrige Phase kann anschließend leicht von der alkoholischen Phase abgetrennt werden.

In dem Fall, dass anorganische Partikel der Bindemittelzusammensetzung zugemischt werden, werden die anorganischen Partikel bevorzugt in einer Menge zwischen 0,1 bis 15 Gew%, bevorzugt 0,5 bis 10 Gew%, insbesondere bevorzugt zwischen 1 bis 5 Gew% in verwendet.

Wie bereits oben erwähnt, kann die vorliegende Zusammensetzung zur Beschichtung bzw. Versiegelung von Kanten von Holzfaserplatten, insbesondere WPC, HDF oder MDF-Platten, verwendet werden.

Entsprechend umfasst mindestens eine Holzfaserplatte, wie z.B. HDF- oder MDF-Platte, mindestens eine erfindungsgemäße Zusammensetzung, mit der insbesondere die Kanten der Holzfaserplatte zum Zwecke der Versiegelung beschichtet sind.

Die Zusammensetzung kann auf die Kanten der Holzfaserplatten z.B. mittels Sprühen, Walzen oder unter Verwendung eines Vakuumaten aufgetragen werden.

Die Schichtdicke der Zusammensetzung auf der Plattenkante kann in einem Bereich zwischen 10 und 50 µm, bevorzugt zwischen 20 und 40 µm liegen.

Die Zusammensetzung kann im Flüssigauftrag mit einer Menge zwischen 100 und 200 Silan fl. g/m2, bevorzugt zwischen 120 und 150 Silan fl. g/m2 auf die Plattenkanten aufgebracht werden. Dies ergibt einen Feststoffanteil auf der Plattenkante zwischen 5 und 25 mg/cm², bevorzugt zwischen 10 und 20 mg/cm².

Die vorliegenden Holzfaserplatten können verschiedene Bindemittelsysteme aufweisen, die als Bindemittel mit den Holzfasern vermischt und verpresst werden. Bevorzugte Bindemittelsysteme sind: Formaldehyd-Harze, wie Harnstoff-Formaldehyd-Harze, Melamin-Formaldehyd-Harze, Melamin-Harnstoff-Formaldehyd-Harze; Polyurethane, bevorzugt auf der Basis von Polydiphenylmethandiisocyanat (PMDI), Epoxidharz oder Polyesterharze.

Die vorliegenden Holzfaserplatten können auch eine Beschichtung auf der Plattenoberseite mit Folien, z.B. Folien aus thermoplastischen Materialien wie PVC oder PP, oder Papierlagen, wie z.B. Dekorpapierlagen oder Overlaypapiere aufweisen.

Besonders bevorzugte Holzfaserplatten sind:
- HDF-Platte mit Harnstoff-Formaldehyd-Leim und imprägniert mit einem Präpolymer aus Isocyanat und Polyol;
- HDF-Platte mit Harnstoff-Formaldehyd-Leim und auf mindestens einer Plattenoberseite aufgeklebter Folie, wie PVC-Folie;
- HDF-Platte mit Melamin-Harnstoff-Formaldehyd-Leim;
- HDF-Platte mit PMDI-Leim, und
- WPC-Platte mit aufgeklebter Folie, wie Polypropylen (PP)-Folie.

Entsprechend werden zunächst HDF-Platten mit qualitativ höherwertigen Leimen (MUF-Leim, PMDI-Leim) hergestellt bzw. eine mit Standard-UF-Leim hergestellte HDF nachträglich auf einer Imprägnierstation mit einem PU-Präpolymer vollständig durchimprägniert. Anschließend werden diese Platten in einer KT-Presse jeweils mit Melaminharz Imprägnierten Papierlagen (Overlaypapier, Dekorpapier und Gegenzug) beschichtet. Dies erfolgt unter hohem Druck und hohen Temperaturen (p=40 bar, T=200°C, t=15 sec). Nach dem Abkühlen der beschichteten Platten werden diese für die Dielenfertigung bereitgestellt. Als weitere Varianten wurden WPC- und HDF-Platten mit thermoplastischen Folien beschichtet. Alle Varianten wurden an einer Fussbodenstrasse zu Dielen aufgetrennt und im Profil auf den Kanten mit der erfindungsgemäßen Zusammensetzung versiegelt. Es wurden auch Vergleichsmuster ohne Versiegelung produziert. Die aufgetragene Zusammensetzung wird durch IR-Strahler thermisch aktiviert. Dabei muss die Aktivierungsenergie an der Diele bei mindestens 80°C liegen.

Die Erfindung wird nachfolgend unter Bezugnahme an Ausführungsbeispielen näher erläutert.

### Ausführungsbeispiel 1: Herstellung einer Versiegelungszusammensetzung

12,3g Ocytltriethoxysilan, 2,4g Trimethylsilan, 6,1g Phenyltriethoxysilan, 20,8g Tetraethoxysilan und 28,8 g einer wässriges SiO₂ Dispersion (50 Gew. %) der Fa. Obermaier werden vorgelegt, auf 80 °C erhitzt und gerührt, unter Rühren wird nun 3,6 g para Toluolsäure in Wasser (30 Gew.%) hinzugegeben und für 120 Minuten gerührt. Nach weiteren 24 Stunden wird nun unter Rühren der pH Wert über die Zugabe einer 25 % igen Ammoniklösung (in obigem Bsp. 6,2 g) auf einen pH-Wert von 7 angehoben.

Nach einer weiteren Rührzeit von 2 Stunden wird nun 80 g Wasser hinzugegeben, wieder 30 Minuten gerührt und anschließend wird die Suspension für 4 Stunden ohne Rühren gelagert. Nach dieser Wartezeit trennt sich die wässrige Phase mit dem Binderanteil von der ethanolischen Phase. Die wässrige Phase wird nun über einen Scheidetrichter getrennt. Man erhält somit das anorganische wässrige Beschichtungssystem.

50 g dieses Beschichtungssystem (Feststoff: 52%) wird nun mit 20 g einer wässrigen Polyurethanlösung (Fa. Alberdingk U 3251, Feststoff: 35%) vermischt.

Das Beschichtungssystem kann nun mit einer Schaumstoffwalze oder einer Pipette auf eine Kante aufgetragen und thermisch gehärtet werden (Bsp. 100 °C, 5 Minuten).

### Ausführungsbeispiel 2: HDF mit UF-Leim und Präpolymer

Eine 7,4 mm HDF mit einer Rohdichte von ca. 850 kg/m³ wird in einer Gießmaschine mit einem Präpolymer in einer Menge 1,2 kg/m² abgegossen. Die Platte wird in eine Vakuumstation überführt und mittels Vakuum das Präpolymer in die HDF hineingesaugt. Die Platten werden anschließend drei Tage gelagert, dann in einer KT-Presse mit Melaminharz imprägnierten Papieren (Overlay, Dekor und Gegenzug) unter Druck und Temperatur beschichtet ( p=40 bar, T=200°C, t=15 sec ).

Die Platten werden zum Abkühlen in ein Reifelager überführt und nach drei Tagen auf einer Fussbodenstrasse zu Dielen aufgetrennt. Im Weiteren werden sie mit Nut und Feder versehen und dann werden die Profile im Durchlauf mit der Zusammensetzung des Ausführungsbeispiels 1 besprüht (Auftragsmenge: 100 g fl./m², Feststoffgehalt: ca. 42%). Mit einem IR-Strahler wurde das Silan getrocknet. Zum Vergleich wurde eine Platte wurde zu Dielen ohne Kantenversiegelung aufgetrennt.

### Ausführungsbeispiel 3: MDF mit PMDI-Leim

An einer MDF-Linie wurden HDF-Platten mit einem PMDI-Bindemittel hergestellt. Dabei wurde mit einem Beleimungsfaktor von 8% und einer Rohdichte von 850 kg/m³ gearbeitet. Die HDF wurden nach der Presse abgekühlt und geschliffen. Die Platten werden anschließend drei Tage gelagert, dann in einer KT-Presse mit Melaminharz imprägnierten Papieren (Overlay, Dekor und Gegenzug) unter Druck und Temperatur beschichtet (p=40 bar, T=200°C, t=15 sec).

Die Platten werden zum Abkühlen in ein Reifelager überführt und nach drei Tagen auf einer Fussbodenstrasse zu Dielen aufgetrennt. Im Weiteren werden sie mit Nut und Feder versehen und dann werden die Profile im Durchlauf mit der Zusammensetzung des Ausführungsbeispiels 1 besprüht (Auftragsmenge: 100 g fl./m², Feststoffgehalt: ca. 42%). Mit einem IR-Strahler wurde das Silan getrocknet. Zum Vergleich wurde eine Platte wurde zu Dielen ohne Kantenversiegelung aufgetrennt.

### Ausführungsbeispiel 4: HDF mit MUF-Leim

An einer MDF-Linie wurden HDF-Platten mit einem MUF-Bindemittel hergestellt. Dabei wurde mit einem Beleimungsfaktor von 25%, einer Melaminverstärkung von 24% und einer Rohdichte von 850 kg/m³ gearbeitet. Die HDF wurden nach der Presse abgekühlt und geschliffen. Die Platten werden anschließend drei Tage gelagert, dann in einer KT-Presse mit Melaminharz imprägnierten Papieren (Overlay, Dekor und Gegenzug) unter Druck und Temperatur beschichtet (p=40 bar, T=200°C, t=15 sec).

Die Platten werden zum Abkühlen in ein Reifelager überführt und nach drei Tagen auf einer Fussbodenstrasse zu Dielen aufgetrennt. Im Weiteren werden sie mit Nut und Feder versehen und dann werden die Profile im Durchlauf mit der Zusammensetzung des Ausführungsbeispiels 1 besprüht (Auftragsmenge: 100 g fl./m², Feststoffgehalt: ca. 42%). Mit einem IR-Strahler wurde das Silan getrocknet. Zum Vergleich wurde eine Platte wurde zu Dielen ohne Kantenversiegelung aufgetrennt.

### Ausführungsbeispiel 5: Kantenquelltest

Aus beschichteten Platten wurden für den Kantenquelltest je zwei x zwei Muster geschnitten ( 150 × 50 mm × Dicke ). Die Hälfte der Muster wurde dann an den Schnittkanten mit der Zusammensetzung des Ausführungsbeispiels 1 versiegelt, wobei die Auftragsmenge immer bei ca. 100 g/m² lag. Anschließend wurde der Kantenquelltest gemäß der ISO 24 336:2005 durchgeführt.

Die Quellung wird gemäß der DIN EN 13329:2016 bzw. der ISO 24336: 2005 nach dem sogenannten Kantenquelltest bestimmt. Dabei wird ein beschichteter Probekörper ohne Profil (150 x 50 mm) vertikal 50 mm in ein Wasserbad (20°C) eingetaucht und dann im eingetauchten Bereich nach 24 h die Kantenquellung an drei Stellen bestimmt. Die Ergebnisse sind in der folgenden Tabelle zusammengefasst.

| Bsp. | Probenbezeichnung* | Stärke in mm | Kantenquellung in % | Reduzierung gegenüber Nullprobe in % |
|---|---|---|---|---|
| | Nullprobe UF-Leim** | 7,4 | 16,2 | - |
| | Nullprobe UF-Leim + Kantenversiegelung | 7,4 | 8,1 | 50,0 |
| 2 | HDF UF- Leim mit Prepolymer | 7,4 | 5,25 | - |
| 2 | HDF UF-Leim mit Prepolymer + Kantenversiegelung | 7,4 | 2,3 | 56,2 |
| 3 | HDF mit PMDI*** | 7,4 | 9,7 | - |
| 3 | HDF mit PMDI + | 7,4 | 6,6 | 32 |
| | Kantenversiegelung | | | |
| 4 | HDF mit MUF-Leim**** | 7,4 | 8,1 | - |
| 4 | HDF mit MUF-Leim + Kantenversiegelung | 7,4 | 2,6 | 68 |
| | WPC mit aufgeklebter PP-Folie***** | 4,5 | 11,0 | - |
| | WPC mit aufgeklebter PP-Folie + Kantenversiegelung | 4,5 | 5,9 | 46,4 |
| | HDF UF-Leim mit PVC-Folie | 9,0 | 9,9 | - |
| | HDF UF-Leim mit PVC-Folie + Kantenversiegelung****** | 9,0 | 4,8 | 51,5 |

| | | | | |
|---|---|---|---|---|
| *Die Kantenversiegelung auf Silanbasis wurde in einer Menge von ca. 100 g fl./m² aufgetragen ** Die HDF hatte eine Dichte von ca. 850 kg/m³ und war mit einem Standard-Fussbodenaufbau ( Overlay, Dekor und Gegenzug ) beschichtet *** Die HDF hatte eine Rohdichte von 850 kg/m³ und eine Beleimung von ca. 8% bezogen auf Fasern und war mit einem Standard-Fussbodenaufbau ( Overlay, Dekor und Gegenzug ) beschichtet. **** Die HDF hatte eine Dichte von ca. 850 kg/m³ und eine Beleimung von 25% eines mit 24% Melamin verstärkten UF-Leim und war mit einem Standard-Fussbodenaufbau ( Overlay, Dekor und Gegenzug ) beschichtet ***** Die WPC bestand aus ca. 50 Gew.% PET-Fasern und ca. 50 Gew% aus Holzfasern. Auf die Platte war eine 0,4 mm dicke PET-Folie mit Hilfe eines PU-Hotmelts aufgeklebt. ****** Die HDF hatte eine Rohdichte von 850 kg/m3. Auf sie war mit Hilfe eines PU-Hotmelts eine 0,5 mm dicke PVC-Folie aufgeklebt. | | | | |

Wie aus der Tabelle zu entnehmen ist, ist eine Reduzierung der Kantenquellung unabhängig von dem verwendeten Leimsystem und der Plattenzusammensetzungen mehr oder weniger deutlich möglich. Damit kann dieses Versiegelungssystem für eine Vielzahl verschiedener Plattentypen eingesetzt werden.

## Patentansprüche

1. Holzfaserplatte mit beschichteten und versiegelten Kanten, wobei die für die zur Versiegelung / Beschichtung der Kanten verwendete Zusammensetzung herstellbar ist aus
- mindestens einer Verbindung der allgemeinen Formel (I)
**R¹ₐSiX₍₄₋ₐ₎** **(I),**
und/oder deren Hydrolyseprodukte, wobei
- X H, OH oder ein hydrolysierbarer Rest ausgewählt aus der Gruppe umfassend AlkoxyAryloxy, Acyloxy ist, und
- R¹ ein organischer Rest ist ausgewählt aus der Gruppe umfassend Alkyl, Aryl, Cycloalkyl, die durch -O- oder -NH- unterbrochen sein können, und
- wobei R¹ mindestens eine funktionelle Gruppe Q₁ aufweist, die ausgewählt ist aus einer Gruppe enthaltend eine Hydroxy-, Amino-, Monoalkylamino-, Carboxy-, Mercapto-, Alkoxy-, Aldehyd-, Acryl-, Acryloxy-, Methacryl-, Methacryloxy-, Cyano-, Isocyano-und Epoxid- Gruppe, und
- a = 0, 1, 2, 3, insbesondere 0 oder 1 ist,
- mindestens einer Verbindung der allgemeinen Formel (II)
**R²_{b}SiX_{(4-b)}** **(II),**
und/oder deren Hydrolyseprodukte, wobei
- X die obige Bedeutung aufweist,
- R² ein nicht-hydrolysierbarer organischer Rest R² ist ausgewählt aus der Gruppe umfassend Alkyl, Aryl, Alkenyl, Alkinyl, Cycloalkyl, Cycloalkenyl, und
- b = 1, 2, 3, oder 4 ist, und
- mindestens einer Polymerdispersion.

2. Holzfaserplatte nach Anspruch 1, **dadurch gekennzeichnet, dass** die Schichtdicke der Zusammensetzung auf der Plattenkante in einem Bereich zwischen 10 und 50 µm, bevorzugt zwischen 20 und 40 µm liegt.

3. Holzfaserplatte nach einem der vorhergehenden Ansprüche, **gekennzeichnet durch** eines der folgenden Bindemittelsysteme zum Vermischen und Verpressen mit den Holzfasern: Formaldehyd-Harze, insbesondere Harnstoff-Formaldehyd-Harze, Melamin-Formaldehyd-Harze, Melamin-Harnstoff-Formaldehyd-Harze; Polyurethane, bevorzugt auf der Basis von Polydiphenylmethandiisocyanat (PMDI), Epoxidharz oder Polyesterharze.

4. Holzfaserplatte nach einem der vorhergehenden Ansprüche, **dadurch gekennzeichnet, dass** auf der Plattenoberseite Folien, insbesondere Folien aus thermoplastischen Materialien wie PVC oder PP, oder Papierlagen, insbesondere Dekorpapierlagen oder Overlaypapiere, vorgesehen sind.

5. Holzfaserplatte nach einem der vorhergehenden Ansprüche, **dadurch gekennzeichnet, dass** die Holzfaserplatte ausgewählt ist aus einer Gruppe umfassend
- HDF-Platte mit Harnstoff-Formaldehyd-Leim und imprägniert mit einem Präpolymer aus Isocyanat und Polyol;
- HDF-Platte mit Harnstoff-Formaldehyd-Leim und auf mindestens einer Plattenoberseite aufgeklebter Folie, wie PVC-Folie;
- HDF-Platte mit Melamin-Harnstoff-Formaldehyd-Leim;
- HDF-Platte mit PMDI-Leim, und
- WPC-Platte mit aufgeklebter Folie, wie Polypropylen (PP)-Folie.

6. Holzfaserplatte nach einem der vorhergehenden Ansprüche, **dadurch gekennzeichnet, dass** X ausgewählt ist aus einer Gruppe enthaltend H, OH, C₁₋₆-Alkoxy, insbesondere Methoxy, Ethoxy, n-Propoxy und Butoxy, C₆₋₁₀-Aryloxy, insbesondere Phenoxy, C₂₋₇-Acyloxy, insbesondere Acetoxy oder Propionoxy,.

7. Holzfaserplatte nach einem der vorhergehenden Ansprüche, **dadurch gekennzeichnet, dass** R¹ ausgewählt ist ausgewählt aus einer Gruppe umfassend C₁-C₃₀-Alkyl, insbesondere C₅-C₂₅-Alkyl, C₂-C₆-Alkenyl, C₃-C₈-Cycloalkyl und C₃-C₈-Cycloalkenyl.

8. Holzfaserplatte nach einem der vorhergehenden Ansprüche, **dadurch gekennzeichnet, dass** die mindestens eine funktionelle Gruppe Q¹ ausgewählt ist aus einer Gruppe enthaltend Epoxid-, Hydroxy-, Ether-, Acryl-, Acryloxy-, Methacryl-, Methacryloxy-, Amino-, Alkoxy-, Cyano- und/oder Isocyano-Gruppe.

9. Holzfaserplatte nach einem der vorhergehenden Ansprüche, **dadurch gekennzeichnet, dass** die Verbindung der allgemeinen Formel (I) der Zusammensetzung der Formel **SiX₄,** insbesondere mit X OH oder Alkoxy, insbesondere Methoxy, Ethoxy, n-Propoxy oder i-Propoxy, entspricht.

10. Holzfaserplatte nach einem der vorhergehenden Ansprüche, **dadurch gekennzeichnet, dass** der nicht-hydroliserbare organische R² der Verbindung der allgemeinen Formel (II) der Zusammensetzung ausgewählt ist aus einer Gruppe umfassend C₁-C₁₅-Alkyl, insbesondere C₁-C₁₀-Alkyl, C₂-C₆-Alkenyl, C₂-C₆-Alkinyl und C₆-C₁₀-Aryl.

11. Holzfaserplatte nach einem der vorhergehenden Ansprüche, **dadurch gekennzeichnet, dass** mindestens eine Verbindung der allgemeinen Formel (I) in der Zusammensetzung und mindestens zwei, bevorzugt mindestens drei Verbindungen der allgemeinen Formel (II) in der Zusammensetzung enthalten sind.

12. Holzfaserplatte nach einem der vorhergehenden Ansprüche, **dadurch gekennzeichnet, dass** die Verbindung der allgemeinen Formel (I) in der Zusammensetzung in einer molaren Menge zwischen 0,08 - 0.2 mol, bevorzugt 0,1 - 0,15 mol, insbesondere bevorzugt 0,1-0,12 mol und die Verbindung der allgemeinen Formel (II) in der Zusammensetzung in einer molaren Menge zwischen 0,05 und 0,1 mol, bevorzugt zwischen 0,06 und 0,09 mol, besonders bevorzugt zwischen 0,07 und 0,08 mol enthalten sind.

13. Holzfaserplatte nach einem der vorhergehenden Ansprüche, **dadurch gekennzeichnet, dass** das mindestens eine Polymer der Zusammensetzung ausgewählt ist aus der Gruppe enthaltend Polyurethane, insbesondere Polydiphenylmethandiisocyanat (PMDI), Epoxidharze, Melaminharze, Polyacrylate.

14. Verfahren zur Beschichtung von Kanten einer Holzfaserplatte nach einem der vorhergehenden Ansprüche, **dadurch gekennzeichnet, dass** die Zusammensetzung mittels Sprühen, Walzen oder unter Verwendung eines Vakuumaten auf die Kanten aufgetragen werden.

15. Verfahren nach Anspruch 14, **dadurch gekennzeichnet, dass** die Zusammensetzung im Flüssigauftrag mit einer Menge zwischen 100 und 200 Silan fl. g/m², bevorzugt zwischen 120 und 150 Silan fl. g/m² auf die Plattenkanten aufgebracht wird, so dass sich ein Feststoffanteil auf der Plattenkante zwischen 5 und 25 mg/cm², bevorzugt zwischen 10 und 20 mg/cm² ergibt.

## Claims

1. Wooden fibre board with coated and sealed edges, wherein the composition used for the sealing/coating of the edges is producible from
- at least one compound of the general formula (I)
**R¹ₐSiX₍₄₋ₐ₎** **(I),**
and/or hydrolysis products thereof, wherein
- X is H, OH or a hydrolysable group selected from the group comprising alkoxyaryloxy, acyloxy, and
- R¹ is an organic radical selected from the group comprising alkyl, aryl, cycloalkyl, which may be interrupted by -O- or -NH-, and
- wherein R¹ has at least one functional group Q₁ selected from a group containing a hydroxy, amino, monoalkylamino, carboxy, mercapto, alkoxy, aldehyde, acrylic, acryloxy, methacrylic, methacryloxy, cyano, isocyano and epoxy group, and
- a = 0, 1, 2, 3, in particular 0 or 1,
- at least one compound of the general formula (II)
**R²_{b}SiX_{(4-b)}** **(II),**
and/or hydrolysis products thereof, wherein
- X has the above meaning,
- R² is a non-hydrolysable organic radical R² selected from the group comprising alkyl, aryl, alkenyl, alkynyl, cycloalkyl, cycloalkenyl, and
- b = 1, 2, 3, or 4, and
- at least one polymer dispersion.

2. Wood fibre board according to claim 1, **characterized in that** the layer thickness of the composition on the board edge is in a range between 10 and 50 µm, preferably between 20 and 40 µm.

3. Wood fibre board according to one of the preceding claims, **characterized by** one of the following binder systems for mixing and pressing with the wood fibres: Formaldehyde resins, in particular urea-formaldehyde resins, melamine-formaldehyde resins, melamine-urea-formaldehyde resins; polyurethanes, preferably based on polydiphenylmethane diisocyanate (PMDI), epoxy resins or polyester resins.

4. Wood fibre board according to one of the preceding claims, **characterized in that** films, in particular films made of thermoplastic materials such as PVC or PP, or paper layers, in particular decorative paper layers or overlay papers, are provided on the top side of the board.

5. Wood fibre board according to one of the preceding claims, **characterized in that** the wood fibre board is selected from a group comprising
- HDF board with urea-formaldehyde glue and impregnated with a prepolymer of isocyanate and polyol;
- HDF board with urea-formaldehyde glue and film glued on at least one board top side, such as PVC film;
- HDF board with melamine-urea-formaldehyde glue;
- HDF board with PMDI glue, and
- WPC board with glued-on film, such as polypropylene (PP) film.

6. Wood fibre board according to one of the preceding claims, **characterized in that** X is selected from a group containing H, OH, C₁₋₆ -alkoxy, in particular methoxy, ethoxy, n-propoxy and butoxy, C₆₋₁₀ -aryloxy, in particular phenoxy, C₂₋₇ -acyloxy, in particular acetoxy or propionoxy.

7. Wood fibre board according to one of the preceding claims, **characterized in that** R¹ is selected from a group comprising C₁ -C₃₀ -alkyl, in particular C₅ -C₂₅ -alkyl, C₂-C₆ - alkenyl, C₃-C₈ -cycloalkyl and C₃-C₈ -cycloalkenyl.

8. Wood fibre board according to one of the preceding claims, **characterized in that** the at least one functional group Q¹ is selected from a group containing epoxy, hydroxy, ether, acrylic, acryloxy, methacrylic, methacryloxy, amino, alkoxy, cyano and/or isocyano group.

9. Wood fibre board according to one of the preceding claims, **characterized in that** the compound of the general formula (I) corresponds to the composition of the formula **SiX₄** , in particular with X OH or alkoxy, in particular methoxy, ethoxy, n-propoxy or i-propoxy.

10. Wood fibre board according to one of the preceding claims, **characterized in that** the non-hydrolyzable organic R² of the compound of the general formula (II) of the composition is selected from a group comprising C₁ -C₁₅ -alkyl, in particular C₁-C₁₀ - alkyl, C₂-C₆ -alkenyl, C₂-C₆ -alkynyl and C₆-C₁₀ -aryl.

11. Wood fibre board according to one of the preceding claims, **characterized in that** at least one compound of the general formula (I) is contained in the composition and at least two, preferably at least three compounds of the general formula (II) are contained in the composition.

12. Wood fibre board according to one of the preceding claims, **characterized in that** the compound of the general formula (I) is present in the composition in a molar amount between 0.08-0.2 mol, preferably 0.1-0.15 mol, particularly preferably 0.1-0.12 mol, and the compound of the general formula (II) is present in the composition in a molar amount between 0.05 and 0.1 mol, preferably between 0.06 and 0.09 mol, particularly preferably between 0.07 and 0.08 mol.

13. Wood fibre board according to one of the preceding claims, **characterized in that** the at least one polymer of the composition is selected from the group comprising polyurethanes, in particular polydiphenylmethane diisocyanate (PMDI), epoxy resins, melamine resins, polyacrylates.

14. A method of coating edges of a wood fibre board according to one of the preceding claims, **characterised in that** the composition is applied to the edges by spraying, rolling or using a vacuumate.

15. Method according to claim 14, **characterized in that** the composition is applied in liquid form to the panel edges in an amount between 100 and 200 silane fl. g/m², preferably between 120 and 150 silane fl. g/m², resulting in a solid content on the panel edge between 5 and 25 mg/cm², preferably between 10 and 20 mg/cm².

## Revendications

1. Plaque de fibres de bois avec des bords revêtus et scellés, dans laquelle la composition utilisée pour le scellement/le revêtement des bords peut être fabriquée à partir de
- au moins un composé de formule générale (I)
**R¹ₐSiX₍₄₋ₐ₎** **(I),**
et/ou ses produits d'hydrolyse, dans laquelle
- X est H, OH ou un reste hydrolysable sélectionné à partir du groupe comprenant alcoxy, aryloxy, acyloxy, et
- R¹ est un reste organique sélectionné à partir du groupe comprenant de l'alkyle, aryle, cycloalkyle qui peuvent être interrompus par -O- ou -NH-, et
- dans laquelle R¹ présente au moins un groupe fonctionnel Q₁ qui est sélectionné à partir d'un groupe contenant un groupe hydroxy, amino, monoalkylamino, carboxy, mercapto, alcoxy, aldéhyde, acryle, acryloxy, méthacryle, méthacryloxy, cyano, isocyano et époxy, et
- a = 0, 1, 2, 3, en particulier est 0 ou 1,
- au moins un composé de formule générale (II)
**R²_{b}SiX_{(4-b)}** **(II),**
et/ou ses produits d'hydrolyse, dans laquelle
- X présente la signification ci-dessus,
- R² est un reste R² organique non hydrolysable sélectionné à partir du groupe comprenant alkyle, aryle, alkényle, alkinyle, cycloalkyle, cycloalkenyle, et
- b = 1, 2, 3, ou est 4, et
- au moins une dispersion de polymère aqueuse.

2. Plaque de fibres de bois selon la revendication 1, **caractérisée en ce que** l'épaisseur de couche de la composition sur le bord de plaque se situe dans une plage entre 10 et 50 µm, de préférence entre 20 et 40 µm.

3. Plaque de fibres de bois selon l'une des revendications précédentes, **caractérisée par** un des systèmes de liant qui suivent destinés à être mélangés et comprimés avec les fibres de bois : des résines de formaldéhyde, en particulier des résines d'urée-formaldéhyde, des résines de mélamine-formaldéhyde, des résines de mélamine-urée-formaldéhyde ; des polyuréthanes, de manière préférée à base de polydiphénylméthandiisoxyanate (PMDI), de résines d'époxy ou de résines de polyester.

4. Plaque de fibres de bois selon l'une des revendications précédentes, **caractérisée en ce que** sont prévus sur la face supérieure de plaque des films, en particulier des films composés de matériaux thermoplastiques comme le PVC ou PP, des strates de papier, en particulier des strates de papier décoratif ou des papiers overlay.

5. Plaque de fibres de bois selon l'une des revendications précédentes, **caractérisée en ce que** la plaque de fibres de bois est sélectionnée à partir d'un groupe comprenant
- plaque de fibres haute densité avec de la colle d'urée-formaldéhyde et imprégnée d'un prépolymère composé d'isocyanate et de polyol ;
- plaque de fibres haute densité avec de la colle d'urée-formaldéhyde et avec un film collé sur au moins une face supérieure de plaque ;
- plaque de fibres haute densité avec de la colle de mélamine-urée-formaldéhyde ;
- plaque de fibres haute densité avec de la colle de PMDI, et
- plaque de composite bois-plastique avec un film collé, comme un film de polypropylène (PP).

6. Plaque de fibres de bois selon l'une des revendications précédentes, **caractérisée en ce que** X est sélectionné à partir d'un groupe contenant H, OH, C₁₋₆-alkoxy, en particulier méthoxy, ethoxy, n-propoxy et butoxy, C₆₋₁₀-aryloxy, en particulier phénoxy, C₂₋₇-acyloxy, en particulier acétoxy ou propionoxy.

7. Plaque de fibres de bois selon l'une des revendications précédentes, **caractérisée en ce que** R¹ est sélectionné à partir d'un groupe comprenant C₁-C₃₀-alkyle, en particulier C₅-C₂₅-alkyle, C₂-C₆-alkényle, C₃-C₈-cycloalkyle et C₃-Cs-cycloalkényle.

8. Plaque de fibres de bois selon l'une des revendications précédentes, **caractérisée en ce que** l'au moins un groupe fonctionnel Q¹ est sélectionné à partir d'un groupe contenant un groupe époxy, hydroxy, éther, acryle, acryloxy, méthacryle, méthacryloxy, amino, alkoxy, cyano, et/ou isocyano.

9. Plaque de fibres de bois selon l'une des revendications précédentes, **caractérisée en ce que** le composé de formule générale (I) correspond à la formule **SiX₄,** en particulier avec X OH ou alkoxy, en particulier methoxy, ethoxy, n-propoxy ou i-propoxy.

10. Plaque de fibres de bois selon l'une des revendications précédentes, **caractérisée en ce que** le R² organique non hydrolysable de la formule générale (II) de la composition est sélectionné à partir d'un groupe comprenant C₁-C₁₅-alkyle, en particulier C₁-C₁₀-alkyle, C₂-C₆-alkényle, C₂-C₆-alkinyle et C₆-C₁₀-aryle.

11. Plaque de fibres de bois selon l'une des revendications précédentes, **caractérisée en ce qu'**au moins un composé de formule générale (I) dans la composition et au moins deux, de préférence au moins trois composés de formule générale (II) dans la composition sont contenus.

12. Plaque de fibres de bois selon l'une des revendications précédentes, **caractérisée en ce que** le composé de la formule générale (I) dans la composition est contenu dans une quantité molaire entre 0,08 et 0,2 mol, de préférence 0,1 à 0,15 mol, en particulier de préférence 0,1 à 0,12 mol et le composé de la formule générale (II) dans la composition est contenu dans une quantité molaire entre 0,05 et 0,1 mol, de préférence entre 0,06 et 0,09 mol, particulièrement de préférence entre 0,07 et 0,08 mol.

13. Plaque de fibres de bois selon l'une des revendications précédentes, **caractérisée en ce que** l'au moins un polymère de la composition est sélectionné à partir du groupe contenant des polyuréthanes, en particulier polydiphénylméthandiisoxyanate (PMDI), des résines d'époxy, des résines de mélamine, des polyacrylates.

14. Procédé de revêtement de bords d'une plaque de fibres de bois selon l'une des revendications précédentes, **caractérisé en ce que** la composition est appliquée sur les bords au moyen d'une pulvérisation, d'un laminage ou en utilisant un dispositif sous vide.

15. Procédé selon la revendication 14, **caractérisé en ce que** la composition est appliquée à l'état fluide sur les bords de plaque avec une quantité entre 100 et 200 g/m² silane liq., de préférence entre 120 et 150 g/m² de silane liq. de sorte qu'il en résulte une fraction solide sur le bord de plaque entre 5 et 25 mg/cm², de préférence entre 10 et 20 mg/cm².
